# EUROPÄISCHE PATENTSCHRIFT

(11) **EP 2 047 435 B1**
(45) Veröffentlichungstag und Bekanntmachung des Hinweises auf die Patenterteilung: **24.10.2012**
(21) Anmeldenummer: 07765728.6
(22) Anmeldetag: 29.06.2007
(51) Int. Cl.: G07C 9/00, H01H 9/02, H05K 5/00, B60R 25/00, E05B 19/04

(54) **MOBILE BETÄTIGUNGSVORRICHTUNG**
MOBILE ACTUATING DEVICE
DISPOSITIF D'ACTIONNEMENT MOBILE

(30) Priorität: 10.07.2006 DE 102006032060
(43) Veröffentlichungstag der Anmeldung: 15.04.2009
(73) Patentinhaber: Huf Hülsbeck & Fürst GmbH & Co. KG, 42551 Velbert (DE)
(72) Erfinder: GELDMACHER (geb. JESCHKE) Alexander, 42113 Wuppertal (DE)
(74) Vertreter: Vogel, Andreas
(86) Internationale Anmeldenummer: PCT/EP2007/056550
(87) Internationale Veröffentlichungsnummer: WO 2008/006710

(56) Entgegenhaltungen:
- US-B1- 6 621 446

## Beschreibung

Die Erfindung betrifft eine mobile Betätigungsvorrichtung, insbesondere zur Fernbedienung eines Schließsystems eines Kraftfahrzeuges, mit einem Gehäuse, das eine erste und eine zweite Gehäuseschale aufweist, einem Innenraum, der zumindest teilweise durch die Gehäuseschalen begrenzt ist, einer zumindest teilweise innerhalb des Innenraumes angeordneten Elektronikeinheit für eine Datenkommunikation mit dem Schließsystem, mindestens einem Betätigungsglied, das innerhalb eines Gehäusedurchbruches der ersten Gehäuseschale angeordnet ist, einem zwischen dem Betätigungsglied und der ersten Gehäuseschale umlaufenden Spalt, einem an der dem Innenraum zugewandten Seite der ersten Gehäuseschale vorgesehenen Trägerelement, und einem mit der Elektronikeinheit verbundenen Schaltelement, das dem Betätigungsglied zugeordnet ist.

Derartige mobile Betätigungsvorrichtungen werden vielfach eingesetzt, um die benutzerseitige Elektronik einer Fernbedienung aufzunehmen, die als Sender oder Sender mit Empfänger, bzw. als Transponder, ausgeführt sein kann. Derartige Betätigungsvorrichtungen können unter anderem als Schlüsselanhänger oder als Griff eines mechanischen Schlüssels ausgeführt sein. Eine wesentliche Anforderung an derartige mobile Betätigungsvorrichtungen ist es, die innenliegende Elektronik zuverlässig vor Umwelteinflüssen, insbesondere Feuchtigkeit und Schmutz zu schützen. Dies setzt besondere Maßnahmen zur Abdichtung der beweglich zu lagernden Betätigungsglieder voraus.

Aus der US 6 621 446 81 ist eine mobile Betätigungsvorrichtung mit einem Gehäuse aus zwei Gehäuseschalen bekannt, die einen Innenraum begrenzen, in dem eine Elektronikeinheit und ein Trägerelement angeordnet sind. Das Trägerelement befindet sich beabstandet zu der ersten Gehäuseschale innerhalb des Innenraumes. Ferner ist ein Betätigungsglied vorgesehen, das formschlüssig mit einer ersten Gehäuseschale verbunden ist und lösbar am Trägerelement anliegen kann.

In der DE 199 64 166 C1 ist eine mobile Betätigungsvorrichtung beschrieben, die zwei Gehäuseschalen aufweist, von denen wenigstens Teile einen eine Elektronikeinheit aufnehmenden Innenraum bilden. Innerhalb der Betätigungsvorrichtung ist ein membranartiges Dichtelement vorgesehen, das in das Gehäuse der Betätigungsvorrichtung eingelegt ist. Hierbei ist das Dichtelement in einem zwischen den Gehäuseschalen bestehenden, durchgehenden Spalt verklemmt. Die Gehäuseschalen bilden einen abgeschlossenen Innenraum, wobei das Dichtelement den Innenraum in einen oberen und einen unteren Raum trennt. Im unteren Raum ist eine Platine angeordnet, die elektronische Elemente, insbesondere Schaltelemente aufweist. Des Weiteren sind an der oberen Gehäuseschale Betätigungsglieder vorgesehen, die mit ihren Stößeln mittelbar über das membranartige Dichtelement auf die Schaltelemente wirken. Bei Betätigung eines Betätigungsgliedes wird der Stößel in Richtung des Dichtelementes bewegt. Bei einer Kontaktierung des Dichtelementes und einer entsprechenden, auf das Betätigungsglied wirkenden Kraft wird auch das Schaltelement aktiviert, wodurch eine Aktion der Betätigungsvorrichtung ausgeführt wird.

Der Erfindung liegt die Aufgabe zugrunde, eine mobile Betätigungsvorrichtung der vorgenannten Art weiter zu bilden, bei der der Innenraum sicher gegen Umwelteinflüsse geschützt ist, wobei die Betätigungsvorrichtung kostengünstig herzustellen ist und gehobene Ansprüche bezüglich Optik und Tasthaptik erzielt werden. Ferner sollte zugleich

dem Benutzer eine Kontrollmöglichkeit beispielsweise hinsichtlich der Funktionsweise der Betätigungsvorrichtung auf einfache Weise zur Verfügung gestellt werden.

Zur Lösung dieser Aufgabe wird eine mobile Betätigungsvorrichtung mit den Merkmalen des Anspruches 1 vorgeschlagen. In den abhängigen Ansprüchen sind bevorzugte Weiterbildungen ausgeführt.

Dazu ist erfindungsgemäß vorgesehen, dass die erste Gehäuseschale eine Anzeige zur optischen Darstellung von Informationen, insbesondere in Verbindung mit der Funktionsweise der Elektronikeinheit und/oder mit dem Zustand des Schließsystems aufweist, mit einer in der ersten Gehäuseschale ausgeführten Öffnung, aus der ein innerhalb des Gehäuses generierbares Lichtsignal emittierbar ist, wobei das Trägerelement, das einstückig mit dem Betätigungsglied verbunden ist, lichtdurchlässig und aus einem ersten Material mit einem geringen Elastizitätsmodul ausgeführt ist, und die Öffnung durch zumindest einen Teil des Trägerelementes vollständig ausgefüllt ist, wodurch das Lichtsignal über das Trägerelement durch die Öffnung nach Außen leitbar ist, und dem Betätigungsglied, das aus einem zweiten Material ausgeführt ist, wobei das zweite Material einen wesentlich größeren Elastizitätsmodul aufweist als das erste Material.

Bei der vorliegenden Erfindung liegt das Trägerelement unmittelbar an der dem Innenraum zugewandten Seite der ersten Gehäuseschale an, wobei es gleichzeitig mehrere Funktionen übernimmt. Zum einen dichtet das Trägerelement den Innenraum zuverlässig ab, so dass Feuchtigkeit, Wasser, Staub oder dergleichen nicht in den Innenraum gelangt, wo es die Elektronikeinheit in ihrer Funktion nachteilig beeinträchtigen kann. Zum anderen dient das Trägerelement als Auflagemittel für das Betätigungsglied. Es hat sich gezeigt, dass durch den Einsatz des ersten Materials mit einem geringen Elastizitätsmodul ein ansprechendes Tastgefühl beim Benutzer durch Betätigen des Betätigungsgliedes erreichbar ist, das aus dem zweiten Material besteht, welches einen wesentlich größeren Elastizitätsmodul aufweist, als das erste Material. Da das Trägerelement unmittelbar am Betätigungsglied angeordnet ist, wird gleichzeitig eine kompakte Bauweise erzielt. Besonders vorteilhaft ist, dass zur optischen Darstellung von Informationen das Trägerelement eine Art Leitfunktion übernimmt, wodurch das innerhalb der Betätigungsvorrichtung generierte Lichtsignal durch die Öffnung der ersten Gehäuseschale nach Außen geleitet wird. Die Anzeige kann derart ausgeführt sein, dass durch beispielsweise eine Betätigung eines Betätigungsgliedes der Benutzer kontrollieren kann, ob die Betätigungsvorrichtung, insbesondere die Elektronikeinheit funktioniert. Verlässt ein Lichtsignal (beispielsweise in einer roten Farbe) die Anzeige, bedeutet es für den Benutzer, dass die Betätigungsvorrichtung voll funktionsfähig ist. Ferner kann die Anzeige optische Informationen über den Verriegelungs- oder Entriegelungszustandes des Schließsystems übermitteln. Hierbei ist es denkbar, über mehrfarbige Lichtsignale, die die Anzeige verlassen, eine Zustandsmeldung des Schließsystems wiederzugeben. Die Anzeige kann unterschiedliche geometrische Formen annehmen. In einer möglichen Ausführungsform kann es sich bei der Anzeige um eine punktförmige Fläche handeln. Alternativ dazu kann die Anzeige als ein großflächiges Display ausgeführt sein, das durch eine entsprechende Öffnung der ersten Gehäuseschale aufgenommen ist.

In einer bevorzugten Ausführungsform der Erfindung weist das erste Material des Trägerelementes einen Elastizitätsmodul E von E < 1000 N/mm², vorzugsweise von E < 500 N/mm², mehr bevorzugt von E < 100 N/mm² und besonders bevorzugt von E < 50 N/mm² auf. Das Trägerelement ist somit weich - elastisch ausgeführt, wohin hingegen das zweite Material, aus dem vorzugsweise das Gehäuse, die erste Gehäuseschale und das Betätigungsglied ausgeführt sind, ein härterer Kunststoff ist. In einer möglichen Ausgestaltungsform der Erfindung ist das zweite Material ein Polyamid, ein glasfaserverstärktes Polyamid, ABS oder dergleichen. Das erste, weiche Material ist vorzugsweise ein thermoplastisches Elastomer, wie zum Beispiel ein Copolymer. Um eine gute Beweglichkeit des Betätigungsgliedes zu gewährleisten sowie eine ansprechende Tasthaptik zu erzielen, weist das erste Material eine Härte H von H < 90 Shore A, vorzugsweise von H < 85 Shore A und mehr bevorzugt H < 80 Shore A auf.

Besonders vorteilhaft ist, dass das Trägerelement mit der ersten Gehäuseschale einschließlich des Betätigungsgliedes ein einteiliges Bauteil bilden. In einem ersten Verfahrensschritt wird die erste Gehäuseschale mit dem jeweiligen Betätigungsglied aus dem zweiten Kunststoffmaterial gespritzt. Das Werkzeug der Spritzgießmaschine ist derart ausgeführt, dass sich ein umlaufender Spalt zwischen dem Betätigungsglied und der ersten Gehäuseschale bildet. Im darauf folgenden Schritt wird das Trägerelement unmittelbar an der ersten Gehäuseschale, insbesondere am Betätigungsglied angeordnet. Vorteilhafterweise besteht zwischen dem Trägerelement und der ersten Gehäuseschale eine stoffschlüssige Verbindung. Beispielsweise kann das Trägerelement an der ersten Gehäuseschale durch Ultraschallschweißen, Laserschweißen oder dergleichen befestigt sein. In einer vorteilhaften Ausführungsform bildet die erste Gehäuseschale mit dem Trägerelement eine 2- Komponenten Spritzgussbauteil. Das bedeutet, dass im zweiten Verfahrensschritt, nachdem die erste Gehäuseschale im Spritzgussverfahren entstanden ist, das Trägerelement flächig auf der Unterseite der Gehäuseschale angespritzt wird. Anschließend befindet sich das Trägerelement flächig, unlösbar an der ersten Gehäuseschale, wobei ein Zugang in den Innenraum der Betätigungsvorrichtung von Außen durch den umlaufenden Spalt ausgeschlossen ist.

In einer möglichen Ausführungsform der mobilen Betätigungsvorrichtung ist das Trägerelement lediglich einseitig, ausgehend vom Innenraum nach Außen lichtdurchlässig ausgeführt. Hierdurch wird erreicht, dass von Außen der Innenraum sowie die Elektronikeinheit über den umlaufenden Spalt nicht erkennbar sind. Ausgehend vom Innenraum jedoch ist eine Transmission eines innerhalb der Betätigungsvorrichtung generierten Lichtsignals nach Außen möglich. Die einseitige Lichtdurchlässigkeit des Trägerelementes kann durch eine Bedampfung erfolgen. Die bedampfte Schicht auf dem Trägerelement kann eine dünne metallische Schicht sein.

Vorteilhafterweise ist das Betätigungsglied aus einer Ruhelage durch Aufbringen einer äußeren Kraft in eine Betätigungslage bringbar ist, wobei das Trägerelement derart ausgebildet ist, dass in Betätigungslage ausgehend vom Trägerelement eine Rückstellkraft wirkt, die das Betätigungsglied zurück in seine Ruhelage bringt. Besonders vorteilhaft ist, dass in der Betätigungslage des Betätigungsgliedes alleine vom Trägerelement eine Rückstellkraft entsteht, die das Betätigungsglied mit dem Trägerelement zurück in die Ruhelage bringt. In einer möglichen Ausführungsform der Betätigungsvorrichtung weist das Trägerelement entlang des umlaufenden Spaltes eine zum Innenraum gerichtete Wölbung auf. Diese Wölbung begünstigt die in der Betätigungslage des Betätigungsgliedes entstehende Rückstellkraft des Trägerelementes. Ferner bewirkt die Wölbung, dass eine Verlängerung des Stellweges des Betätigungsgliedes von seiner Ruhelage in die Betätigungslage erreicht werden kann.

Zweckmäßigerweise ist ein Lichtelement der Öffnung zugeordnet, wobei das Trägerelement zwischen der Öffnung und dem Lichtelement sich befindet. Bei dem Lichtelement kann es sich beispielsweise um eine LED handeln.

In einer weiteren vorteilhaften Ausgestaltung der Betätigungsvorrichtung kann das Trägerelement eine organische LED (OLED) sein, die mehrschichtig aufgebaut ist und eine organische, Licht emittierende Schicht zwischen zwei Elektrodenschichten aufweist. Bei dieser Ausführungsform ist das Trägerelement selbst das Lichtelement, welches durch Anliegen einer Spannung und/oder eines Stromes Licht emittieren kann. Besonders vorteilhaft ist, dass die organische LED sehr dünn und flexibel ausgestaltet ist. Zweckmäßigerweise ist eine Elektrodenschicht als Anode und die andere Elektrodenschicht als Kathode ausgeführt. Das als organische LED ausgebildete Trägerelement kann des Weiteren weitere Schichten umfassen. Bei dieser Ausführungsform ist das Trägerelement vorteilhafterweise mit der ersten Gehäuseschale laserverschweißt. Weitere stoffschlüssige Verbindungen sind ebenfalls denkbar, wie über eine adhäsive Verbindung.

Zweckmäßigerweise weist das Trägerelement einen Kopfbereich auf, der durch die Öffnung aufgenommen ist. Vorteilhaftweise wird die Öffnung der ersten Gehäuseschale vollständig durch den Kopfbereich des Trägerelementes ausgefüllt. Wird Licht in der Betätigungsvorrichtung generiert, gelangt es durch den Kopfbereich und verlässt die Anzeige nach Außen. Da der Kopfbereich vollständig die Öffnung verschließt, besteht nicht die Gefahr, dass über die Anzeige etwaige Schmutzpartikel, Wasser, Feuchtigkeit oder dergleichen in den Innenraum der Betätigungsvorrichtung gelangen.

Eine die Erfindung verbessernde Maßnahme kann vorsehen, dass ein an der dem Innenraum zugewandten Seite des Trägerelementes ausgeführter Vorsprung vorgesehen ist, der in der Betätigungslage des Betätigungsgliedes das Schaltelement kontaktiert. Der Vorsprung wirkt als eine Art Stößel, der in der Betätigungslage des Betätigungsgliedes das Schaltelement aktiviert. Hierdurch kann eine spezielle Tasthaptik für den Benutzer erzielt werden.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: eine Draufsicht auf eine mobile Betätigungsvorrichtung, die an der Vorderseite eine erste Gehäuseschale mit Betätigungsliedern aufweist,
- Fig. 2: die Gehäuseschale gemäß Figur 1 in dreidimensionaler Seitenansicht,
- Fig. 3: die Gehäuseschale gemäß Figur 2 in dreidimensionaler Unteransicht,
- Fig. 4: eine Schnittansicht gemäß IV - IV aus Figur 1 und
- Fig. 5: eine weitere Ausführungsmöglichkeit der mobilen Betätigungsvorrichtung, bei der ein Trägerelement vorgesehen ist, dass mehrschichtig aufgebaut ist.

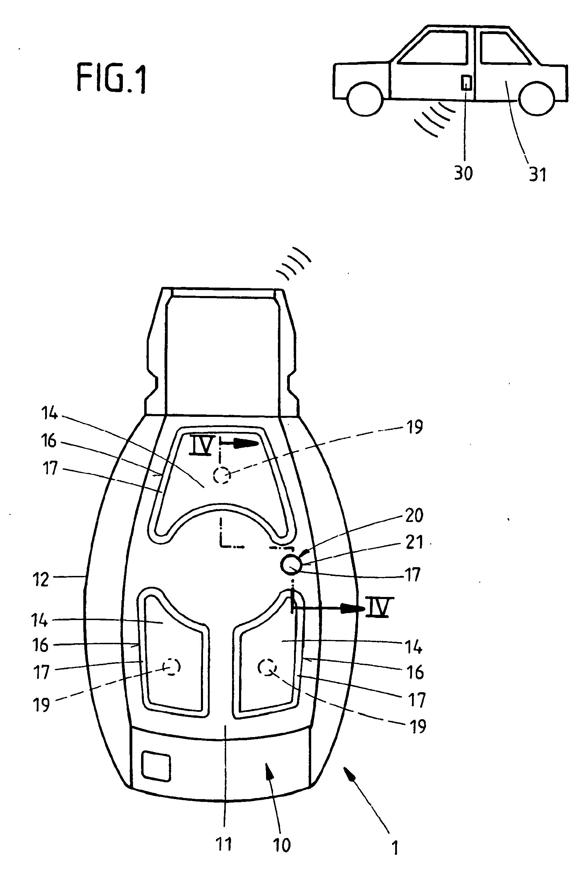

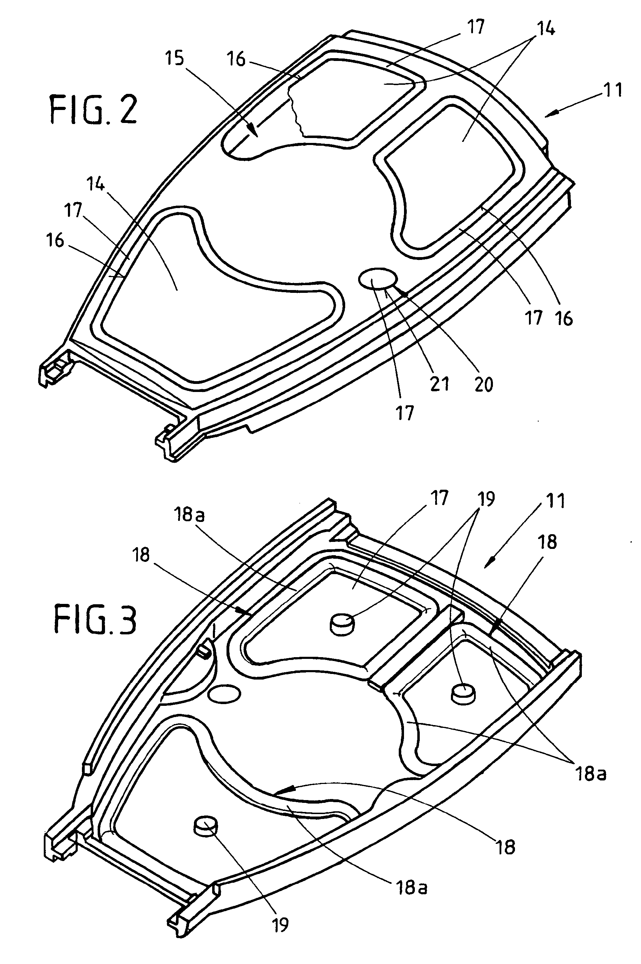

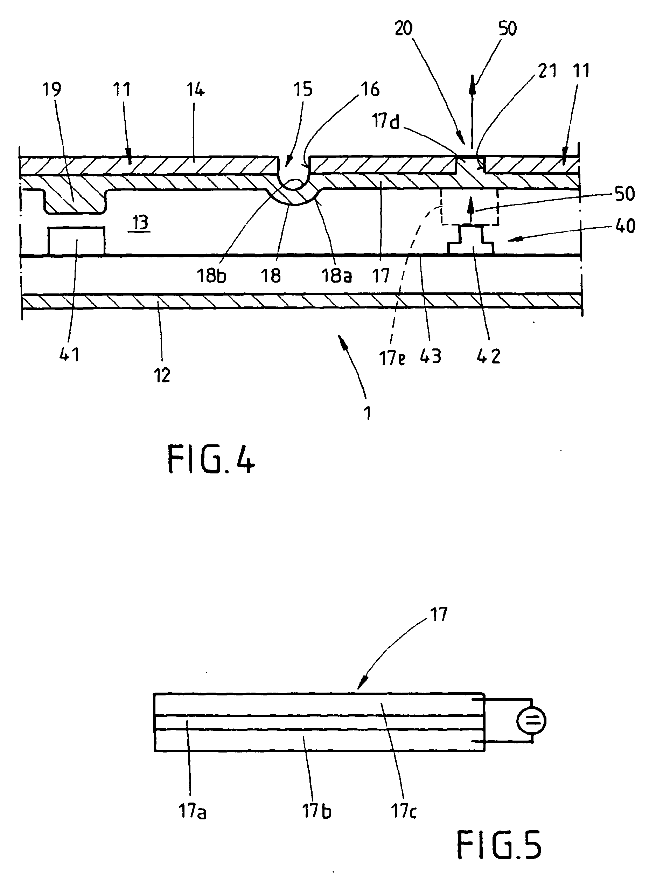

In Figur 1 ist eine mobile Betätigungsvorrichtung 1 gezeigt, die als elektronischer Schlüssel zur Fernbedienung eines Schließsystems 30 eines Kraftfahrzeugs 31 verwendet wird. Die Betätigungsvorrichtung 1 weist ein Gehäuse 10 auf, das eine erste 11 und eine zweite Gehäuseschale 12 aufweist. Hierbei ist die zweite Gehäuseschale 12 rückseitig angeordnet. Die erste Gehäuseschale 11 weist im vorliegenden Ausführungsbeispiel drei Betätigungsglieder 14 auf, die innerhalb eines Gehäusedurchbruches der ersten Gehäuseschale 11 angeordnet sind. Der Gehäusedurchbruch 15 ist hierbei in Figur 2 angedeutet. Zwischen der ersten Gehäuseschale 11 und jedem Betätigungsglied 14 befindet sich ein umlaufender Spalt 16. Ferner weist die mobile Betätigungsvorrichtung 1 einen Innenraum 13 auf, der exemplarisch in Figur 4 dargestellt ist. Der Innenraum 13 ist zumindest teilweise durch die Gehäuseschalen 11, 12 begrenzt, wobei innerhalb des Innenraumes 13 eine Elektronikeinheit 40 für eine Datenkommunikation mit dem Schließsystem 30 angeordnet ist. Im vorliegenden Beispiel weist die Elektronikeinheit 40 eine Platine 43 auf, auf der ein Schaltelement 41 sowie ein Lichtelement 42 befestigt sind.

An der dem Innenraum 13 zugewandten Seite der ersten Gehäuseschale 11 ist ein Trägerelement 17 angeordnet. Hierbei ist das Trägerelement 17 einstückig mit der ersten Gehäuseschale 11 sowie dem Betätigungsglied 14 verbunden. Das Trägerelement 17 sowie die erste Gehäuseschale 11 mit den drei Betätigungsglieder 14 bilden ein 2-Komponenten Spritzgussbauteil. Des Weiteren ist das Trägerelement 17 lichtdurchlässig und aus einem ersten Material und einen geringen Elastizitätsmodul ausgeführt.

Wie in Figur 1 und Figur 4 zu erkennen ist, ist die erste Gehäuseschale 11 mit einer Anzeige 20 zur optischen Darstellung von Informationen ausgeführt. Die Anzeige 20 weist eine Öffnung 21 auf, die in der ersten Gehäuseschale 11 ausgebildet ist. Aus der Öffnung 21 ist ein innerhalb des Gehäuses 10 generierbares Lichtsignal 50 emittierbar. Bei der vorliegenden Ausführungsform der Erfindung kann der Benutzer durch Betätigung einer der Betätigungsglieder 14 feststellen bzw. kontrollieren, inwieweit die Betätigungsvorrichtung 1 funktionsfähig ist. Ist die Betätigungsvorrichtung 1 in einem einwandfreien Funktionszustand, wird ein Lichtsignal 50 aus der Anzeige 20 nach Außen emittiert, welches gut sichtbar für den Benutzer ist.

Die Öffnung 21, die im dargestellten Ausführungsbeispiel kreisförmig ausführt ist, ist durch zumindest einen Teil des Trägerelementes 17 vollständig ausfüllt. Hierbei ist das Trägerelement 17 mit einem Kopfbereich 17d ausgeführt, der vollständig die Öffnung 21 bis nach Außen hin ausfüllt. Hierdurch wird zusätzlich ein Formschluss des Trägerelementes 17 mit der ersten Gehäuseschale 11 bewirkt. Die Betätigungsglieder 14 sind aus einer Ruhelage durch Aufbringen einer äußeren Kraft in eine Betätigungslage bringbar, wobei das Trägerelement 17 in der Betätigungslage des Betätigungsgliedes 14 das Schaltelement 41 kontaktiert, wodurch ein Lichtsignal 50 das Lichtelement 42 in Richtung Anzeige 20 verlässt. Hierbei leitet das Trägerelement 17 mit seinem Kopfbereich 17d das eingekoppelte Lichtsignal 50 durch die Öffnung 21 nach Außen. Das Gehäuse 10, insbesondere die erste Gehäuseschale 11 mit den Betätigungsgliedern 14 sind aus einem zweiten Material ausgeführt, das einen wesentlich größeren Elastizitätsmodul aufweist als das erste Material des Trägerelementes 17. Durch die harten Betätigungsglieder 14 und dem relativ weichem Trägerelement 17 kann eine ansprechende Tasthaptik für den Benutzer während der Fernbedienung des Schließsystems 30 erreicht werden.

Besonders vorteilhaft bei der dargestellten Ausführungsform ist, dass das Trägerelement in der Betätigungslage des Betätigungsgliedes 14 eine entsprechende Rückstellkraft von sich aus entstehen lässt, wodurch das Betätigungsglied 14 zurück in seine Ruhelage gebracht wird. Dieses wird unter anderem durch eine zum Innenraum 13 gerichtete Wölbung 18 entlang des umlaufenden Spaltes 16 erreicht. Gemäß Figur 4 weist die Wölbung 18 einen inneren Radius 18a, der an der dem Innenraum 13 zugewandten Seite des Trägerelementes 17 angeordnet ist, und einen äußeren Radius 18b auf, der an der dem Betätigungsglied 14 zugewandten Seite des Trägerelementes 17 angeordnet ist. Hierbei entspricht das 2-fache des äußeren Radius 18b im Wesentlichen der Breite des Spaltes 16. Wie deutlich zu erkennen ist, ist der äußere Radius 18b kleiner als der innere Radius 18a. Ferner wird durch diese balgförmige Ausgestaltung in Form der Wölbung 18 eine Verlängerung des Stellweges für das jeweilige Betätigungsglied 14 erzielt.

Gemäß Figur 4 ist ein an der dem Innenraum 13 zugewandten Seite des Trägerelementes 17 ausgeführter Vorsprung 19 vorgesehen, der in der Betätigungslage des Betätigungsgliedes 14 das Schaltelement 41 kontaktiert. Dieser und weitere Vorsprünge 19 sind ferner in der Figur 3 deutlich zu erkennen, die eine zylinderförmige Form aufweisen. Um das Betätigungsglied 14 von seiner Ruhelage in seine Betätigungslage zu bringen, ist eine äußere Kraft notwendig, die im vorliegenden Ausführungsbeispiel zwischen 2N ≤ K ≤ 15N, vorzugsweise zwischen 3N ≤ K ≤ 7N liegt.

Wie Figur 3 besonders verdeutlicht, weist die erste Gehäuseschale 11 an ihrer Unterseite lediglich ein einziges Trägerelement 17 auf, das gemeinsam mit allen drei Betätigungsglieder 14 einstückig verbunden ist. Hierbei dichtet das Trägerelement 17 zuverlässig den Innenraum 13 von Außen ab. Ein Einbringen von Schmutz, Feuchtigkeit ect. über die Öffnung 21 sowie über den umlaufenden Spalt 16 ist gemäß Fig. 1 oder Fig. 4 ausgeschlossen.

Bei der in Figur 4 dargestellten Ausführungsform ist das Schaltelement 41 als Mikroschalter ausgeführt. Der Mikroschalter 41 weist ein Gehäuse auf, in dem eine Schnappscheibe integriert sein kann. Weitere alternative Schaltelemente sind ebenfalls möglich. Bei dem Lichtelement 42 handelt es sich um eine LED, die unterhalb der Öffnung 21 angeordnet ist, um möglichst effizient ohne Verluste durch die Öffnung 21 Licht 50 nach Außen zu emittieren.

In Figur 4 ist eine weitere Alternative angedeutet, die einen Lichtführungsbereich 17e aufweist, der einstückig und materialeinheitlich mit dem Trägerelement 17 verbunden ist. Der Lichtführungsbereich 17e erstreckt sich bis zum Lichtelement 42. Während das Lichtelement 42 Lichtsignale 50 in Richtung Anzeige 20 emittiert, werden nahezu alle Lichtsignale 50 in den Lichtführungsbereich 17e eingekoppelt, wobei der Lichtführungsbereich 17e die Lichtsignale 50 in Richtung Kopfbereich 17d leitet, wodurch nur sehr geringe Lichtverluste entstehen. Hierbei ist der Brechungsindex des Trägerelementes 17, insbesondere des Lichtführungsbereiches 17e wesentlich größer als der Brechungsindex des den Lichtführungsbereiches 17e umgebenen Innenraumes 13. Vorteilhafterweise berührt das Lichtelement 42 mit seinem freien Ende den Lichtführungsbereich 17e. Eine Verbindung des Lichtelementes 42 mit den Lichtführungsbereiches 17e über einen Kleber ist ebenfalls denkbar, wobei vorteilhafterweise der Brechungsindex des Klebers nahezu dem Brechungsindex des Trägerelementes 17 entspricht. In einer weiteren Ausführungsform der Erfindung besteht ebenfalls die Möglichkeit, dass ein Abstand zwischen dem Lichtelement 42 und dem Lichtführungsbereich 17e besteht.

Das erste Material des Trägerelementes 17 kann nahezu 100-prozentig lichtdurchlässig ausgeführt sein. In gewissen Anwendungsfällen ist es jedoch vorzuziehen, dass lediglich eine Lichtteildurchlässigkeit des Trägerelementes 17 besteht, um beispielsweise von Außen ein Erkennen des Innenraumes 13, insbesondere der elektronischen Bauteile der Elektronikeinheit 40 zu verhindern. In diesem Fall kann das Trägerelement 17 milchig ausgeführt sein. In einer weiteren Alternative ist das Trägerelement 17 lediglich einseitig, ausgehend vom Innenraum 13 nach Außen lichtdurchlässig.

Die Breite des Spaltes 16, der in Figur 1, Figur 2 sowie Figur 4 dargestellt ist, beträgt 0.1mm ≤ B ≤ 2mm, vorzugsweise 0.5mm ≤ B ≤ 1mm und mehr bevorzugt 0.6mm ≤ B ≤ 0.9mm.

In Figur 5 ist eine weitere Ausführungsform des Trägerelementes 17 dargestellt, das als eine OLED ausgeführt ist, die mehrschichtig aufgebaut ist. Die Dicke des Trägerelementes 17 liegt im vorliegenden Ausführungsbeispiel zwischen 0,4 mm und 0,8 mm. Hierbei weist die OLED eine Licht emittierende Schicht 17a auf, die zwischen den Elektrodenschichten 17b, 17c angeordnet ist. Durch Anlegen einer Spannung generiert die OLED Licht, welches gemäß Figur 4 über die Anzeige 20 nach Außen gelangen kann. Die OLED ist hierbei rein schematisch dargestellt, die als ein sehr dünnes, flexibles Trägerelement 17 ausgeführt ist. Neben der Dicht- und Auflagefunktion für das Betätigungsglied 14 ist das Trägerelement 17 gleichzeitig das Lichtelement für die Anzeige 20. In einer nicht dargestellten Ausführungsform kann es sich anbieten, die Anzeige 20 als großflächiges Display auszugestalten, um mehr als nur ein punktförmiges Lichtsignal zur optischen Darstellung von Informationen bereitzustellen. In diesem Fall bietet ein als OLED ausgeführtes Trägerelement 17 besonders große Vorteile.

### Bezugszeichenliste

- 1: mobile Betätigungsvorrichtung, elektronischer Schlüssel
- 10: Gehäuse
- 11: erste Gehäuseschale
- 12: zweite Gehäuseschale
- 13: Innenraum
- 14: Betätigungsglied
- 15: Gehäusedurchbruch
- 16: umlaufender Spalt
- 17: Trägerelement
- 17a: organische, Licht emittierende Schicht, OLED
- 17b: Elektrodenschicht, Anode
- 17c: Elektrodenschicht, Kathode
- 17d: Kopfbereich
- 17e: Lichtführungsbereich
- 18: Wölbung
- 18a: innerer Radius
- 18b: äußerer Radius
- 19: Vorsprung
- 20: Anzeige
- 21: Öffnung

- 30: Schließsystem
- 31: Kraftfahrzeug
- 40: Elektronikeinheit
- 41: Schaltelement
- 42: Lichtelement
- 43: Platine

- 50: Licht

## Patentansprüche

1. Mobile Betätigungsvorrichtung (1), insbesondere zur Fernbedienung eines Schlreßsystems (30) eines Kraftfahrzeuges (31), mit
einem Gehäuse (10), das eine erste (11) und eine zweite Gehäuseschale (12) aufweist,
einem Innenraum (13), der zumindest teilweise durch die Gehäuseschalen (11,12) begrenzt ist, einer zumindest teilweise Innerhalb des Innenraumes (13) angeordneten Elektronlkeinheit (40) für eine Datenkommunikation mit dem Schlleßsystem (30).
mindestens einem Betätlgungsglied (14), das innerhalb eines Gehäusedurchbruches (15) der ersten Gehäuseschale (11) angeordnet ist,
einem zwischen dem Betätigungsglied (14) und der ersten Gehäuseschalen (11) umlaufenden Spalt (16),
einem an der dem Innenraum (13) zugewandten Seite der ersten Gehäuseschale (11) vorgesehenen Trägerelement (17), und
einem mit der Elektronlkelnhelt (40) verbundenen Schaltelement (41), das dem Betätigungeglied (14) zugeordnet ist,
wobei
die erste Gehäuseschale (11) eine Anzeige (20) zur optischen Darstellung von Informationen, insbesondere In Verbindung mit der Funktionsweise der Elektronikeinheit (1) und/oder mit dem Zustand des Schlleßsystems (30) aufweist,
mit
einer In der ersten Gehäuseschale (11) ausgeführten Öffnung (21), aus der ein innerhalb des Gehäuses (10) genenerbares Lichtsignel (50) emittierbar ist wobei die Öffnung (21) durch zumindest einen Teil des Trägerelementes (17) vollständig ausgefüllt ist, wodurch das Lichtsignal (50) über das Trägerelement (17) durch die Öffnung (21) nach Außen leitbar ist **dadurch gekennzeichnet dass** die erste Gehäuseschale (11) und des Trägerelement (17) ein einteiliges Bauteil bilden, das ein 2-Komponenten Spritzgussbautell ist.
und dass das Trägerelement (17), das einstückig mit dem Betätigungsglied (14) verbunden ist, lichtdurchlässig und aus einem ersten Material mit einem geringen Elastizitätsmodul ausgeführt ist, und dass das Betätigungsglied (14) aus einem zweiten Material ausgeführt ist, das einen wesentlich größeren Elastizitätsmodul als das erste Material aufweist.

2. Mobile Betätigungsvorrichtung (1) nach Anspruch 1.
**dadurch gekennzeichnet.**
**dass** das erste Material des Trägerelementes (17) einen Elastizitätsmodul E von E < 1000 N/mm², vorzugsweise von E < 500 N/mm², mehr bevorzugt von E < 100 N/mm² und besonders bevorzugt von E < 50 N/mm² aufweist.

3. Mobile Betätigungsvorrichtung (1) nach Anspruch 1 oder 2,
**dadurch gekennzeichnet,**
**dass** das erste Material des Trägerelementes (17) eine Härte H von H < 90 Shore A, vorzugsweise von H < 85 Shore A und mehr bevorzugt H < 80 Shore A aufweist.

4. Mobile Botätigungsvorrichtung (1) nach einem der vorhergehenden Ansprüche,
**dadurch gekennzeichnet,**
**dass** das Trägerelement (17) lediglich einseitig, ausgehend vom innenraum (13) nach Außen lichtdurchlässig ist.

5. Mobile Betätigungsvorrichtung (1) nach einem der vorhergehenden Ansprüche,
**dadurch gekennzeichnet,**
**dass** das Betätigungsglied (14) aus einer Ruhelage durch Aufbringen einer äußeren Kraft In eine Betätigungslage bringbar ist, wobei das Trägerelement (17) derart ausgebildet ist, dass in Betätigungslage ausgehend vom Trägerelement (17) eine Rückstellkraft wirkt, die das Betätigungsgiled (14) zurück In seine Ruhelage bringt, insbesondere eine äußeren Kraft K von 2N ≤ K ≤ 15N, vorzugsweise von 3N ≤ K ≤ 7N ausreicht, um das Betätlgungsglied (14) aus seiner Ruhelage In die Betätigungslage zu bringen.

6. Mobile Betätigungsvorrichtung (1) nach einem der vorhergehenden Ansprüche,
**dadurch gekennzeichnet,**
**dass** das erste Material ein thermoplastlsches Elastomer ist.

7. Mobile Betätigungsvorrichtung (1) nach einem der vorhergehenden Ansprüche,
**dadurch gekennzeichnet,**
**dass** das Trägerelement (17) entlang des umlaufenden Spaltes (16) eine zum Innenraum (13) gerichtete Wölbung (18) aufweist, Insbesondere die Wölbung (18) einen Inneren Radius (18a), der an der dem Innenraum (13) zugewandten Seite des Trägerelementes (17) angeordnet ist, und einen äußeren Radius (18b) aufweist, der an der dem Betätlgungsglied (14) zugewandten Seite des Trägerelernentes (17) angeordnet ist.

8. Mobile Betätigungsvorrichtung (1) nach Anspruch 7,
**dadurch gekennzeichnet,**
**dass** das 2-fache des äußeren Radius (18b) Im Wesentlichen der Breite des Spaltes (16) entspricht, insbesondere die Breite B des Spaltes (16) 0.1mm ≤ B ≤ 2mm, vorzugsweise 0.5mm ≤ B ≤ 1 mm und mehr bevorzugt 0.6mm ≤ B ≤ 0.9mm beträgt.

9. Mobile Betätlgungsvorrichtung (1) nach Anspruch 7 oder 8,
**dadurch gekennzeichnet,**
**dass** der äußere Radius (18b) kleiner ist als der Innere Radius (18a).

10. Mobile Betatigungsvorrichtung (1) nach einem der vorhergehenden Ansprüche,
**dadurch gekennzeichnet,**
**dass** ein Lichtelement (42) der Öffnung (21) zugeordnet ist, wobei das Trägerelement (17) zwischen der Öffnung (21) und dem Lichtelement (42) sich befindet.

11. Mobile Betätlgungsvorrlchtung (1) nach einem der vorhergehenden Ansprüche,
**dadurch gekennzeichnet,**
**dass** das Trägerelement (17) eine organische LED ist, die mehrschichtig aufgebaut ist und eine organische, Licht emittierende Schicht (17a) zwischen zwei Elektrodenschichten (17b,17c) aufweist.

12. Mobile Betätigungsvorrichtung (1) nach einem der vorhergehenden Ansprüche,
**dadurch gekennzeichnet,**
**dass** die Elektronikeinheit (40) eine Platine (43) aufweist, an der das Schaltelement (41) und/oder das Lichtelement (42) angeordnet sind.

13. Mobile Betätigungsvorrichtung (1) nach einem der vorhergehenden Ansprüche,
**dadurch gekennzeichnet,**
**dass** das Trägerelement (17) einen Kopfbereich (17d) umfasst, der durch die Öffnung (21) aufgenommen ist, insbesondere an der dem Kopfbereich (17d) abgewandten Selte des Trägerelementes (17) ein Lichtführungsberelch (17e) vorsprungartig ausgebildet ist.

14. Mobile Betätigungsvorrichtung (1) nach einem der vorhergehenden Ansprüche,
**dadurch gekennzeichnet,**
**dass** ein an der dem Innenraum (13) zugewandten Seite des Trägerelementes (17) ausgeführter Vorsprung (19) vorgesehen ist, der In der Betätigungslage des Betätigungsglledes (14) das Schaltelement (41) kontaktiert.

15. Mobile Betätigungsvorrichtung (1) nach einem der vorhergehenden Ansprüche,
**dadurch gekennzeichnet,**
**dass** das Trägerelement (17) mit mehreren, an der ersten Gehäuseschale (11) ausgebildeten Betätigungsgliedern (14) verbunden ist.

## Claims

1. A mobile actuating device (1), in particular for the remote operation of a locking system (30) of a motor vehicle (31), with
a housing (10), which has a first (11) and a second housing shell (12),
an interior space (13), which is at least partly bounded by the housing shells (11, 12), an electronic unit (40), at least partly arranged within the interior space (13), for data communication with the locking system (30),
at least one actuating member (14), which is arranged within an aperture (15) of the first housing shell (11),
a peripheral gap (16) between the actuating element (14) and the first housing shell (11),
a supporting element (17) provided on the side of the first housing shell (11) facing towards the interior space (13),
a switching element (41) connected with the electronic unit (40), which switching element (41) is assigned to the actuating member (14), wherein,
the first housing shell (11) has a display (20) for the optical representation of information, in particular in conjunction with the mode of operation of the electronic unit (1) and/or with the state of the locking system (30), with an opening (21) embodied in the first housing shell (11), from which a light signal (50), which can be generated within the housing (10), can be emitted, wherein
the opening (21) is completely filled by at least a part of the supporting element (17), whereby the light signal (50) can be conducted via the supporting element (17) through the opening (21) to the external environment **characterised in that**,
the first housing shell (11) and the supporting element (17) form a one-piece module, which is a 2-component injection cast module,
and **in that**
the supporting element (17), which is integrally connected with the actuating member (14), is transparent to light and embodied from a first material with a low modulus of elasticity,
and **in that**
the actuating member (14) is embodied from a second material, which has a significantly higher modulus of elasticity than the first material.

2. The mobile actuating device (1) in accordance with claim 1,
**characterised in that**,
the first material of the supporting element (17) has a modulus of elasticity E given by E < 1000 N/mm², preferably given by E < 500 N/mm², more preferred if given by E < 100 N/mm², and particularly preferred if given by E < 50 N/mm².

3. The mobile actuating device (1) in accordance with claim 1 or 2,
**characterised in that**,
the first material of the supporting element (17) has a hardness H given by H < 90 Shore A, preferably given by H < 85 Shore A, and more preferred if given by H < 80 Shore A.

4. The mobile actuating device (1) in accordance with one of the preceding claims,
**characterised in that**,
the supporting element (17) is only transparent to light from one side, from the interior space (13) to the external environment.

5. The mobile actuating device (1) in accordance with one of the preceding claims,
**characterised in that**,
the actuating member (14) can be brought from a neutral position into an actuating position by the application of an external force, wherein
the supporting element (17) is designed such that in the actuating position, a restoring force, originating from the supporting element (17), is acting, which brings the actuating member (14) back into its neutral position; in particular an external force K given by 2N ≤ K ≤ 15N, preferably given by 3N ≤ K ≤ 7N, is sufficient to move the actuating member (14) from its neutral position into the actuating position.

6. The mobile actuating device (1) in accordance with one of the preceding claims,
**characterised in that**,
the first material is a thermoplastic elastomer.

7. The mobile actuating device (1) in accordance with one of the preceding claims,
**characterised in that**,
along the peripheral gap (16) the supporting element (17) has a curvature (18) directed towards the interior space (13); in particular the curvature (18) has an inner radius (18a), which is arranged on the side of the supporting element (17) facing towards the interior space (13), and an outer radius (18b), which is arranged on the side of the supporting element (17) facing towards the actuating member (14).

8. The actuating device (1) in accordance with claim 7,
**characterised in that**,
the width of the gap (16) essentially corresponds to 2-times the outer radius (18b), in particular the width B of the gap (16) is given by 0.1 mm ≤ B ≤ 2 mm, is preferably given by 0.5 mm ≤ B ≤ 1 mm, and is more preferred if given by 0.6 mm ≤ B ≤ 0.9 mm.

9. The mobile actuating device (1) in accordance with claim 7 or 8,
**characterised in that**,
the outer radius (18b) is smaller than the inner radius (18a).

10. The mobile actuating device (1) in accordance with one of the preceding claims, **characterised in that**,
a light element (42) is assigned to the opening (21), wherein
the supporting element (17) is located between the opening (21) and the light element (42).

11. The mobile actuating device (1) in accordance with one of the preceding claims,
**characterised in that**,
the supporting element (17) is an organic LED, which is constructed in multiple layers, and has an organic, light-emitting layer (17a) between two electrode layers (17b, 17c).

12. The mobile actuating device (1) in accordance with one of the preceding claims,
**characterised in that**,
the electronic unit (40) has a circuit board (43), on which are arranged the switching element (41) and/or the light element (42).

13. The mobile actuating device (1) in accordance with one of the preceding claims,
**characterised in that**,
the supporting element (17) comprises a head region (17d), which is accommodated by the opening (21); in particular a light guide region (17e) is designed in the form of a projection on the side of the supporting element (17) facing away from the head region (17d).

14. The mobile actuating device (1) in accordance with one of the preceding claims,
**characterised in that**,
a projection (19) is provided, embodied on the side of the supporting element (17) facing towards the interior space (13), which in the actuating position of the actuating member (14) makes contact with the switching element (41).

15. The mobile actuation device (1) in accordance with one of the preceding claims,
**characterised in that**,
the supporting element (17) is connected with a plurality of actuating members (14) designed on the first housing shell (11).

## Revendications

1. Dispositif d'actionnement (1) mobile, en particulier pour la télécommande d'un système de fermeture (30) d'un véhicule automobile (31), comprenant un boîtier (10), qui présente une première coque de boîtier (11) et une seconde coque de boîtier (12),
un espace intérieur (13), qui est délimité au moins partiellement par les coques de boîtier (11, 12), une unité d'électronique (40) disposée au moins en partie à l'intérieur de l'espace intérieur (13) pour une communication de données avec le système de fermeture (30),
au moins un élément d'actionnement (14), qui est disposé à l'intérieur d'une traversée de boîtier (15) de la première coque de boîtier (11),
une fente (16) faisant le tour entre l'élément d'actionnement (14) et la première coque de boîtier (11),
un élément support (17) prévu sur le côté, tourné vers l'espace intérieur (13), de la première coque de boîtier (11), et
un élément de commutation (41) relié à l'unité d'électronique (40), lequel est attribué à l'élément d'actionnement (14),
la première coque de boîtier (11) présentant un affichage (20) pour la représentation optique d'informations, en particulier en liaison avec le mode de fonctionnement de l'unité d'électronique (1) et/ou avec l'état du système de fermeture (30),
comprenant
une ouverture (21) réalisée dans la première coque de boîtier (11), ouverture à partir de laquelle un signal lumineux (50) pouvant être généré à l'intérieur du boîtier (10) peut être émis, l'ouverture (21) étant remplie complètement par au moins une partie de l'élément support (17), de sorte que le signal lumineux (50) est guidé par l'élément support (17) à travers l'ouverture (21) vers l'extérieur, **caractérisé en ce que** la première coque de boîtier (11) et l'élément support (17) forment un composant d'un seul tenant, qui est un élément de construction moulé par injection à 2 composants,
et **en ce que** l'élément support (17), qui est relié d'un seul tenant à l'élément d'actionnement (14), est transparent et réalisé à base d'un premier matériau présentant un faible module d'élasticité, et **en ce que** l'élément d'actionnement (14) est réalisé à base d'un second matériau, qui présente un module d'élasticité nettement plus grand que le premier matériau.

2. Dispositif d'actionnement mobile (1) selon la revendication 1,
**caractérisé**
**en ce que** le premier matériau de l'élément support (17) présente un module d'élasticité E de E < 1 000 N/mm², de préférence de E < 500 N/mm², avec plus de préférence de E < 100 N/mm² et avec une préférence particulière de E < 50 N/mm².

3. Dispositif d'actionnement mobile (1) selon la revendication 1 ou 2,
**caractérisé**
**en ce que** le premier matériau de l'élément support (17) présente une dureté H de H < 90 Shore A, de préférence de H < 85 Shore A et avec plus de préférence H < 80 Shore A.

4. Dispositif d'actionnement mobile (1) selon l'une des revendications précédentes,
**caractérisé**
**en ce que** l'élément support (17) est transparent uniquement d'un côté, à partir de l'espace intérieur (13) vers l'extérieur.

5. Dispositif d'actionnement mobile (1) selon l'une des revendications précédentes,
**caractérisé**
**en ce que** l'élément d'actionnement (14) peut être amené d'une position de repos, par application d'une force extérieure, dans une position d'actionnement, l'élément support (17) étant conçu, de telle sorte qu'une force de rappel agit dans la position d'actionnement à partir de l'élément support (17), laquelle force ramène l'élément d'actionnement (14) dans sa position de repos, en particulier une force extérieure K de 2 N ≤ K ≤ 15 N, de préférence de 3 N ≤ K ≤ 7 N est suffisante pour amener l'élément d'actionnement (14) de sa position de repos dans la position d'actionnement.

6. Dispositif d'actionnement mobile (1) selon l'une des revendications précédentes,
**caractérisé**
**en ce que** le premier matériau est un élastomère thermoplastique.

7. Dispositif d'actionnement mobile (1) selon l'une des revendications précédentes,
**caractérisé**
**en ce que** l'élément support (17) présente le long de la fente (16) périphérique une courbure (18) dirigée vers l'espace intérieur (13), en particulier la courbure (18) présente un rayon (18a) intérieur, qui est disposé sur le côté, tourné vers l'espace intérieur (13), de l'élément support (17), et un rayon (18b) extérieur, qui est disposé sur le côté, tourné vers l'élément d'actionnement (14), de l'élément support (17).

8. Dispositif d'actionnement mobile (1) selon la revendication 7,
**caractérisé**
**en ce que** le double du rayon extérieur (18b) correspond sensiblement à la largeur de la fente (16), en particulier la largeur B de la fente (16) est égale à 0,1 mm ≤ B ≤ 2 mm, de préférence 0,5 mm ≤ B ≤ 1 mm et avec plus de préférence 0,6 mm ≤ B ≤ 0,9 mm.

9. Dispositif d'actionnement mobile (1) selon la revendication 7 ou 8,
**caractérisé**
**en ce que** le rayon (18b) extérieur est inférieur au rayon (18a) intérieur.

10. Dispositif d'actionnement mobile (1) selon l'une des revendications précédentes,
**caractérisé**
**en ce qu'**un élément lumineux (42) est associé à l'ouverture (21), l'élément support (17) se trouvant entre l'ouverture (21) et l'élément lumineux (42).

11. Dispositif d'actionnement mobile (1) selon l'une des revendications précédentes,
**caractérisé**
**en ce que** l'élément support (17) est une LED organique, qui est conçue avec plusieurs couches et présente une couche (17a) organique, émettant de la lumière, entre deux couches d'électrode (17b, 17c).

12. Dispositif d'actionnement mobile (1) selon l'une des revendications précédentes,
**caractérisé**
**en ce que** l'unité d'électronique (40) présente une platine (43), sur laquelle l'élément de commutation (41) et/ou l'élément lumineux (42) sont disposés.

13. Dispositif d'actionnement mobile (1) selon l'une des revendications précédentes,
**caractérisé**
**en ce que** l'élément support (17) comprend une zone supérieure (17d), qui est réceptionnée par l'ouverture (21), une zone de guidage de lumière (17e) est conçue en forme de saillie en particulier sur le côté, opposé à la zone supérieure (17d), de l'élément support (17).

14. Dispositif d'actionnement mobile (1) selon l'une des revendications précédentes,
**caractérisé**
**en ce qu'**il est prévu une saillie (19), réalisée sur le côté, tourné vers l'espace intérieur (13), de l'élément support (17), laquelle saillie est en contact avec l'élément de commutation (41) lorsque l'élément d'actionnement (14) est dans la position d'actionnement.

15. Dispositif d'actionnement mobile (1) selon l'une des revendications précédentes,
**caractérisé**
**en ce que** l'élément support (17) est relié à plusieurs éléments d'actionnement (14) réalisés sur la première coque de boîtier (11).
